# EUROPEAN PATENT SPECIFICATION

(11) **EP 4 426 255 B1**
(45) Date of publication and mention of the grant of the patent: **17.09.2025**
(21) Application number: 21809948.9
(22) Date of filing: 05.11.2021
(51) Int. Cl.: A61H 11/00, A61H 9/00

(54) **ARTIFICIAL MUSCLE MASSAGE GARMENT WITH COILED ELEMENTS IN OR ON TEXTILE FABRIC**
KÜNSTLICHES MUSKELMASSAGEKLEIDUNGSSTÜCK MIT GEWICKELTEN ELEMENTEN IN ODER AUF TEXTILEM GEWEBE
VÊTEMENT DE MASSAGE DE MUSCLE ARTIFICIEL AVEC ÉLÉMENTS ENROULÉS DANS OU SUR UN TISSU TEXTILE

(43) Date of publication of application: 11.09.2024
(73) Proprietor: Essity Hygiene and Health Aktiebolag, 405 03 Göteborg (SE)
(72) Inventor: THOPPEY, Nagarajan, 22761 Hamburg (DE)
(74) Representative: Nederlandsch Octrooibureau
(86) International application number: PCT/EP2021/080812
(87) International publication number: WO 2023/078562

(56) References cited:
- WO-A1-2019/173436
- WO-A1-2020/262802
- WO-A2-2014/022667
- GB-A- 2 170 680
- US-A1- 2019 274 372
- US-B2- 10 617 593

## Description

### Technical field

The present disclosure relates to massage garment, comprising at least one band, provided for being placed around a limb of a user and comprising at least one artificial muscle arranged for applying a compression force to the limb, for example for the treatment of lymphoedema.

### Background art

Massage garments for the treatment of lymphoedema are known, comprising bands which are placed around a limb of a user and which comprise fluid compartments arranged for applying a compression force to the limb. In known massage garments, the fluid compartments form part of a fluid circuit and the compression force is achieved by pumping the fluid into and from the fluid compartments.

These known massage garments require a pump for pumping the fluid into and from the fluid compartments. As a result, these known massage garments are bulky, heavy, expensive, and limit the range of activities that the user can perform during treatment.

From US 10617593B2 and US 9271890 B1 massage garments are known in which shape memory material is used. Other massage devices are known from WO 2019173436A1 and WO 2020262802A1.

Artificial muscles in the form of coiled elements are known from WO 2014/022667 A2.

### Disclosure of the invention

It may be an aim of the present disclosure to provide an alternative massage garment, for example for the treatment of lymphoedema.

It may be an aim of the present disclosure to provide a massage garment, for example for the treatment of lymphoedema, which at least to some extent provides a solution to one or more of the above mentioned disadvantages.

In an aspect, the present disclosure provides a massage garment according to the features of claim 1. Each band may comprise a textile fabric in a heat insulating material. The at least one coiled element is integrated in the textile fabric, for example woven into the fabric or included in channels in the fabric as described herein, or laid on a surface of the fabric and attached thereto, for example by means of adhesive or other attachment means.

As used herein, with "coiled element" is intended any wire-like element which is twisted or shaped into a helical form, such as for example a twisted filament, fiber or wire or bundle of filaments, fibers or wires, or a helical spring.

The inventors have found that coiled elements which contract axially when heated, such as for example coiled elements in a shape memory material or exhibiting a shape memory effect when heated as a result of applied energy, such as resistive heating by applying electric energy, may effectively be used as artificial muscles in massage garments. Partial problems that may occur when such coiled elements are applied as artificial muscles are the avoidance of heat transfer from the coiled elements onto the user's skin and/or the avoidance of friction when the artificial muscles contract and expand. At least one of these partial problems may be solved, according to the disclosure, by providing the at least one coiled element in or on the textile fabric. The textile fabric acts as a support structure for positioning the at least one coiled element and may further minimize or eliminate direct contact between the coiled elements and the user's skin. The fibers of the fabric are preferably made of a heat and/or electrically insulating material. The textile fabric may be any kind of woven or knitted, fabric, in which the coiled elements are integrated as described further herein, or which carries the coiled elements on one surface which is in use preferably directed away from the user's skin. The flexibility or elasticity of the textile fabric may allow the coiled elements or portions thereof to contract and expand more freely when the energy is applied.

In embodiments according to the disclosure, the textile fabric may be a woven fabric, wherein each of the at least one coiled element is provided as a yarn of the woven fabric. Preferably, the at least one coiled element is provided as a first warped yarn of the woven fabric. Preferably, the textile fabric comprises second warped yarns in the heat and/or electrically insulating material, the second warped yarns alternating with the first warped yarns. In such embodiments, the weft yarns of the woven fabric may be made of heat and/or electrically insulating material, preferably the same material as the second warped yarns. The weft yarns may or may not interlace with the first warped yarns.

In embodiments according to the disclosure, the textile fabric may comprise a plurality of channels, wherein the at least one coiled element extends through said channels. For example, the textile fabric may be a laminate which comprises a plurality of channels between layers of said fabric.

In embodiments according to the disclosure, each band may be stretchable, such that for example a baseline pressure can be applied to the limb. In such embodiments, the coiled elements may be provided for being stretched along with the band when the band is placed on the limb and/or for applying the compression force on top of the baseline pressure.

In embodiments according to the disclosure, each band may comprise a further textile layer at least on a side which in use faces the user's skin.

According to the disclosure, the at least one coiled element is a coiled filament in a polymer material.

In embodiments according to the disclosure, the means for applying energy, to cause the artificial muscles to be heated, may comprise a resistive heating mechanism, such as by applying electric current through the coiled element(s) and/or through one or more conductors in the vicinity of the coiled element(s). In embodiments, the resistive heating mechanism may be that the at least one coiled element is conductive or comprises at least one conductive filament.

In embodiments according to the disclosure, the means for applying energy may comprise an interface for connecting the massage garment to a control unit and a power source, i.e. the control unit and power source may be external to the garment.

In embodiments according to the disclosure, the means for applying energy may comprise a control unit and a power source, i.e. the control unit and power source may form part of the garment.

In embodiments according to the disclosure, the control unit may be provided for monitoring at least one process parameter when applying energy to the at least one artificial muscle. In embodiments, the at least one process parameter may comprise at least one of: a temperature of the artificial muscles, the pressure applied to the limb, and/or the energy supplied to the at least one artificial muscle, preferably such that the temperature of the at least one artificial muscle stays below a predetermined temperature and/or the applied pressure stays below a predetermined pressure. For example the control unit may monitor the applied energy, and/or or a feedback of the temperature by means of a sensor, such that the temperature stays below a maximum in the range of 50°-90°C, more preferably 60°-80°C, more preferably a maximum of about 70°C.

In embodiments according to the disclosure, the garment may comprise a plurality of said bands and/or each band comprises a plurality of said artificial muscles. In such embodiments, the control unit may be provided for activating the bands and/or the artificial muscles according to a predetermined schedule, such as in a sequential or random order.

In embodiments according to the disclosure, the control unit may be programmed to control the massage garment to perform a treatment program for the treatment of lymphoedema.

### Brief description of the drawings

The invention will be further elucidated by means of the following description and the appended figures.
Figure 1 shows a schematic view of a massage garment according to an embodiment of the disclosure.
Figure 2 shows a top view of an embodiment of a band of a massage garment according to the present disclosure.
Figure 3 shows a perspective view of another embodiment of a band of a massage garment according to the present disclosure.
Figures 4A-B and 5 respectively show a test setup and a graph of an experiment performed with a prototype of a band of a massage garment according to the present disclosure.
Figures 6-8 show examples of coiled elements which may be used in embodiments of massage garments of which Figure 7 and 8 are not according to the present disclosure.

### Modes for carrying out the invention

The present disclosure will be described with respect to particular embodiments and with reference to certain drawings but the disclosure is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

Furthermore, the terms first, second, third and the like in the description and in the claims, are used for distinguishing between similar elements and not necessarily for describing a sequential or chronological order. The terms are interchangeable under appropriate circumstances and the embodiments of the disclosure can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the disclosure described herein can operate in other orientations than described or illustrated herein.

Furthermore, the various embodiments, although referred to as "preferred" are to be construed as exemplary manners in which the disclosure may be implemented rather than as limiting the scope of the disclosure.

Different aspects of the present disclosure will be described more fully hereinafter with reference to the enclosed drawings. The embodiments disclosed herein can, however, be realized in many different forms and should not be construed as being limited to the aspects set forth herein.

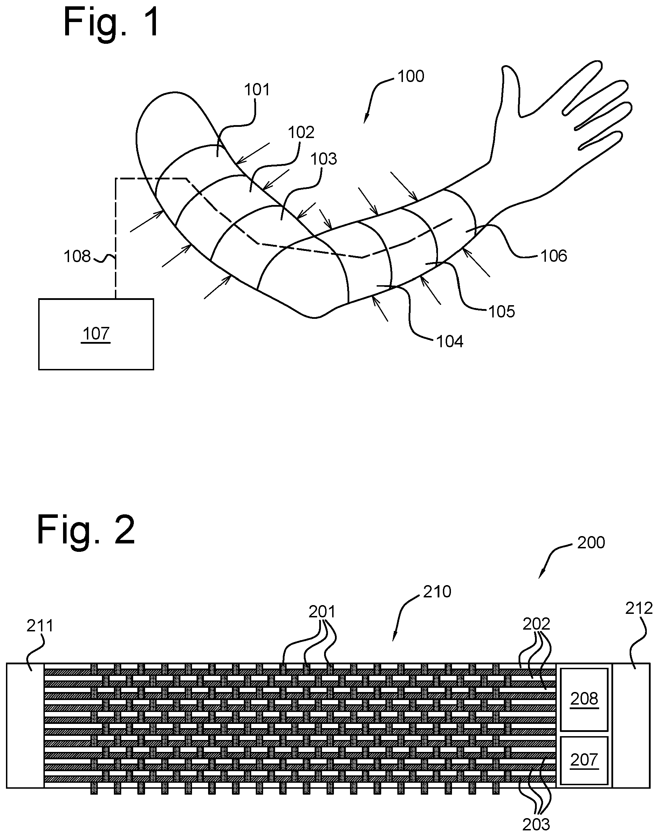

Figure 1 shows a schematic view of a massage garment 100 according to an embodiment of the disclosure, comprising a plurality of bands 101-106. The bands are placed around a limb of a user and comprise at least one artificial muscle 700, 800 arranged for surrounding at least a portion of the limb and applying a compression force to the limb. The massage garment 100 further comprises means for applying energy to the artificial muscles in the bands 101-106, for example in the form of an electric cable 108 connecting to a control unit 107. The control unit includes a power source, e.g. a rechargeable battery or a transformer or power converter for converting mains voltage into electric power suitable for the artificial muscles. Via the cable 108, the control unit 107 is connected to the artificial muscles in the bands 101-106, to control the artificial muscles and supply power thereto, so as to cause them to contract and apply compression forces to the limb.

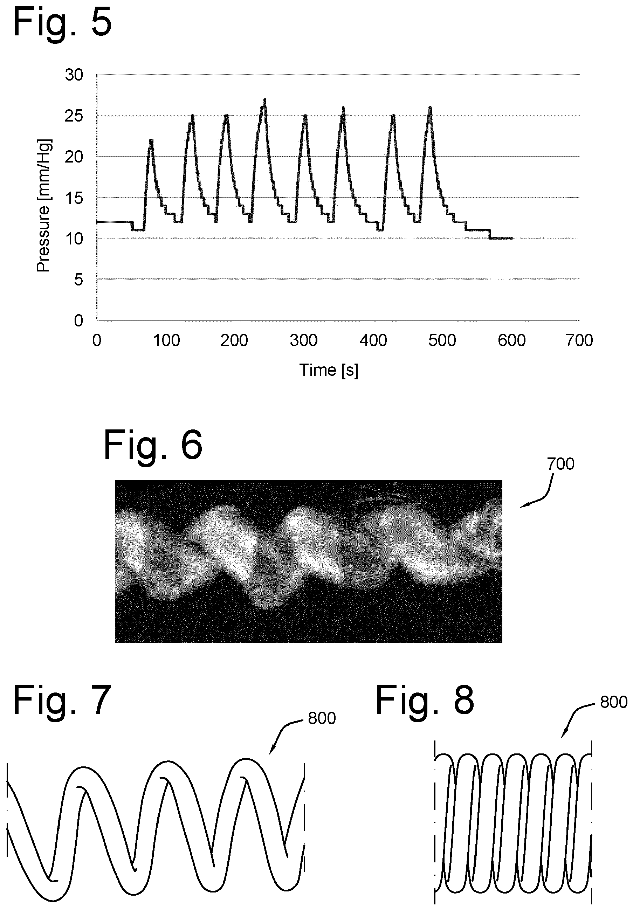

Each artificial muscle 700, 800 comprises a coiled element which contracts in axial direction when heated, for example a coiled element in a shape memory material or exhibiting a shape memory effect when heated, for example by means of resistive heating. Examples of coiled elements are shown in Figures 6-8. The coiled elements are wire-like elements which are twisted or shaped into a helical form, such as for example a twisted filament, fiber or wire or bundle of filaments, fibers or wires. Such coiled elements are known as such, for example from WO 2014/022667 A2.

In the embodiment shown in Figure 1, the control unit 107, which includes the power source, is external to the garment. In alternative embodiments, the control unit and power source may be provided in or on the garment itself. For example, each band 101-106 may comprise its own power source and individual control unit (see Fig. 2). In embodiments, these individual control units may be provided to communicate with each other in order to apply a treatment programme to the limb.

In embodiments according to the disclosure, the control unit 107 may be provided for monitoring a temperature of the artificial muscles and/or limiting the energy supplied to the at least one artificial muscle, in order to prevent them from overheating and reduce the risk of burns to the user's skin. In embodiments, this may be achieved by monitoring the power or current supplied to each artificial muscle, or the duration of the time period during which each muscle is active, or the like. In embodiments, temperature sensors may be provided in the bands 101-106 to provide feedback on the temperature of the artificial muscles to the control unit 107, or in the case of each band having its own control unit, to this individual control unit. In embodiments, the control unit(s) may be provided for limiting the temperature of the artificial muscles to a predetermined maximum, preferably a maximum in the range of 50°-90°C, more preferably 60°-80°C, more preferably a maximum of about 70°C.

In embodiments according to the disclosure, the massage garment may comprise one or more bands 101-106. Further, each band may comprise one or more artificial muscles. The control unit(s) 107 may be provided for activating the bands 101-106 and/or the artificial muscles 700, 800 according to a predetermined schedule, such as in a sequential or random order. In embodiments, the control unit(s) may be programmed to control the massage garment to perform a treatment program for the treatment of lymphoedema.

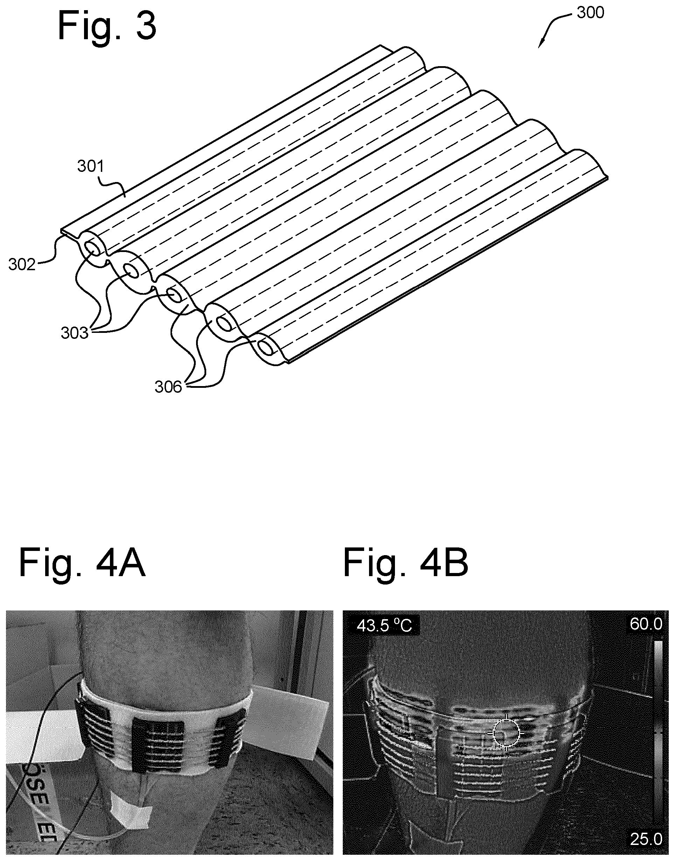

In embodiments according to the disclosure, each band 101-106 comprises a textile fabric in a heat and/or electrically insulating material and the at least one artificial muscle or coiled element is provided in or on the textile fabric. This means that the at least one coiled element is integrated in the textile fabric, for example woven into the fabric or included in channels in the fabric as described herein, or laid on a surface of the fabric and attached thereto, for example by means of adhesive or other attachment means. Figures 2 and 3 show embodiments of suitable bands.

The heat and/or electrically insulating material of the fibres of the textile fabric is preferably a (thermo)plastic material such as for example Polytetrafluoroethylene (PTFE), Polyamides, Polyesters, Polyaramids, or other, or a combination of such materials.

In the embodiment of Figure 2, the textile fabric of the band 200 is a woven fabric 210, wherein the coiled elements 203 are provided as yarns of the woven fabric 210. In the embodiment shown, the coiled elements 203 are provided as first warped yarns of the woven fabric which alternate with second warped yarns 202 in the heat and/or electrically insulating material. The weft yarns 201 of the woven fabric are preferably also made of heat and/or electrically insulating material, preferably the same material as the second warped yarns 202.

In the embodiment of Figure 3, the textile fabric of the band 300 is a laminate of two layers of fabric 301, 302, which comprises a plurality of channels 306 between the layers. This is achieved by connecting the two layers 301, 302 to each other only at locations in between the channels. The connections may be continuous, i.e. along the full length of the channels, or intermittently, i.e. only portions between the channels are connected. The at least one coiled element 303 is provided through the channels 306. The textile fabric layers 301, 302 may each be a woven fabric in a heat and/or electrically insulating material.

In embodiments, the at least one coiled element 203, 303 may comprise one or more coiled elements which extend along the fabric a number of times, such as for example one or more coiled elements which extend back and forth a number of times as yarn of the woven fabric 210 or through the channels 306 of the laminate 301-302. Alternatively, or additionally, the at least one coiled element 203, 303 may comprise a plurality of coiled elements which preferably extend substantially parallel to each other and which extend along the fabric only once.

The bands 200, 300 may be circular bands, i.e. bands without any closure that are provided for being brought over the user's limb and moved along the limb into their desired position. The bands 200, 300 may also be flat bands with a closure, such as for example fasteners like a hook-and-loop type fastener, push buttons, or other. In the embodiment shown in Figure 2, the band 200 has end sections 211, 212 which are provided with complementary portions of a hook-and-loop type fastener.

The bands 200, 300 of Figures 2 and 3 may be stretchable as a whole, such that when they are placed on the limb, a baseline pressure is applied to the limb. The coiled elements 203, 303 are being stretched along with the band when the band is placed on the limb and, when activated, apply a compression force on top of the baseline pressure.

In embodiments, the bands 200, 300 may further comprise cover layers (not shown) on the inside (limb facing side) and/or the outside (side facing away from the limb) of the band, for example as protective cover, as further heat and/or electrical insulation, in order to reduce friction between the user's skin and the textile fabric in or on which the coiled element(s) are provided, or for other purposes.

The bands 200, 300 of Figures 2 and 3 may each have their individual control unit and power source. In figure 2, the control unit 207 and power source (e.g. rechargeable battery) 208 are shown as being located at one end of the woven fabric. In other embodiments, the bands may have an interface for connecting the coiled element(s) to a common, external control unit, as shown in Figure 1. In embodiments where the bands have individual control units, they may be configured for communicating with each other in order to apply a treatment programme.

The coiled elements 203, 303 of the bands of Figures 2 and 3 may each be one or more coiled filaments 700 as shown in Figure 6, which are wires in a polymer material which are twisted and heat set in order to maintain the helical form. Such coiled filaments can be used as artificial muscles when they are stretched or pre-biased and when heating means are provided, as heat will cause them to contract in axial direction. Such coiled filaments in a polymer material are also known as polymer coiled muscles, PCM, and may be fabricated from a variety of polymer yarns, such as for example the following commercially available polymer yarns: Sheidex 4-ply, Dyneema DM20, Dyneema SK72, Dyneema SK78, Gladiator Bonzai Chameleon, SpiderWire Stealth, SpiderWire UltraCast, Berkeley Nanofil, Berkeley Fireline. The helical shape may be achieved as follows. Following known procedures, the yarns are over-twisted yarns into coiled structures. For example, one end of the yarn may be affixed to an electric motor and the other end tied to a mass to provide constant tension while preventing untwisting. Electrically conductive silver coated nylon yarns (Shieldex^{™}, Statex-US, USA) may be incorporated alongside the primary polymer yarns before the yarns are coiled to allow electrical heating during use. The coiled yarn is heat treated under tension in an oven (e.g. 120°C for 2 hr) to set the shape of the PCM and to prevent the yarn from untwisting.

The conductor or conductivity to enable electrical heating of the coiled filaments 700 may be achieved in a number of ways. For example, a conducting coating (like a metal or carbon coating) on a high-strength polymer fiber; metal wire or wires; electronically conducting nanofibers that are helically wrapped about an non-twisted polymer fiber muscle, a coiled polymer fiber muscle, or a twisted but non-coiled polymer fiber muscle; an electronic conductor that is external to the muscle fiber (like metal wires woven into an actuating textile); or an electronic conductor that is interior to a muscle array (like interior to actuating polymer fiber braids). Commercially available high strength polymer fibers that include an electrically conducting coating can be deployed, like presently evaluated Shieldex^{™} Fiber (which is a silvercoated nylon 6,6). The low resistance per fiber length enables fast heating during electrothermal actuation while applying very low voltages. Additionally, polymer fibers that are coated with an electronically conducting carbon or carbon composite can be usefully deployed. Further, electronically conducting pastes and inks can be optionally deployed as coatings to enable electrothermal actuation, such as those containing silver powder (optionally comprising silver nanofibers or silver flakes) in a binder or forms of electronically conducting carbons in a binder (including carbon nanotubes and graphene flakes). For the preparation of electronically conducting coiled polymer fibers, these electronic conductors can be applied to either the nontwisted fiber, the fiber that is twisted but not coiled, or the coiled fiber.

In embodiments, the resistive heating may be achieved by means of conductors in the vicinity of the coiled elements, such as parallel alongside each of the coiled elements, which are provided for being heated by resistive heating and thereby heating the coiled elements. A suitable layout may for example comprise a band comprising a plurality of coiled elements alternating with conductors for heating the coiled elements. In such embodiments, the coiled elements may in themselves be non-conductive.

Figure 7 shows the coiled elements 203, 303 as springs 800 in a shape memory alloy, SMA, not falling within the scope of the present invention. Figure 7 shows the spring 800 in its inactive or stretched state and Figure 8 shows the spring 800 in its active, contracted state, i.e. when electric energy is applied and the spring is heated by resistive heating. Suitable, commercially available SMA coils are Flexinol^{®} from Dynalloy, USA, which are available in a range of coil and wire diameters (coil diameters of 3.2 and 4.75 mm; wire diameters of 0.5, 1.0 and 1.5 mm).

### Experiments

Figures 4 and 5 respectively show a test setup and a graph of an experiment performed with a prototype of a band of a massage garment according to the present disclosure.

The test setup comprises a band, positioned around a user's leg, with one coiled element extending helically around the spacers. The coiled element used was made of the commercially available Gladiator Bonzai Chameleon polymer yarns. Figure 4 shows two photographs: a photograph taken by means of a regular camera and a photograph taken by means of an IR camera (the IR thermal image is superimposed on the visible image; the offset between the overlapped images is erroneously introduced by the software used). The IR image shows that the coiled element heats up. The supplied current was controlled to limit the temperature of the coiled element to 60°.

Figure 5 shows a measurement of the pressure onto the user's limb (in mmHg) over time with the band of Figure 4 being iteratively activated and deactivated (alternately switched ON with a predetermined voltage and amps, and OFF). The baseline pressure was about 12 mmHg, caused by the band being stretched when placed around the user's limb. When activated, the contraction of the coiled elements caused the pressure to increase to about 25 mmHg. So in the active state, the pressure achieve as a result of the compression force is about double the baseline pressure. coiled element heats up. The supplied current was controlled to limit the temperature of the coiled element to 60°.

Figure 5 shows a measurement of the pressure onto the user's limb (in mmHg) over time with the band of Figure 4 being iteratively activated and deactivated (alternately switched ON with a predetermined voltage and amps, and OFF). The baseline pressure was about 12 mmHg, caused by the band being stretched when placed around the user's limb. When activated, the contraction of the coiled elements caused the pressure to increase to about 25 mmHg. So in the active state, the pressure achieve as a result of the compression force is about double the baseline pressure.

## Claims

1. A massage garment (100), comprising
at least one band (101-106), provided for being placed around a limb of a user and comprising at least one artificial muscle (700) arranged for surrounding at least a portion of the limb and applying a compression force to the limb, and
means for applying energy (108) to cause the artificial muscles to be heated,
wherein each band comprises a knitted or woven textile fabric (210) **characterised in that** each artificial muscle comprises a coiled element (203) which contracts when heated and the at least one coiled element is a coiled filament in a polymer material integrated into the textile fabric.

2. The massage garment according to claim 1, wherein the textile fabric is made of a heat and/or electrically insulating material.

3. The massage garment according to claim 1 or 2, wherein the textile fabric is a woven fabric and wherein each of the at least one coiled element is provided as a yarn of the woven fabric.

4. The massage garment according to claim 3, wherein each of the at least one coiled element is provided as a first warp yarn of the woven fabric.

5. The massage garment according to claim 4, wherein the textile fabric comprises second warp yarns of heat and/or electrically insulating material, the second warp yarns alternating with the first warp yarns.

6. The massage garment according to any one of the preceding claims, wherein each band is stretchable for applying a baseline pressure to the limb.

7. The massage garment according to any one of the preceding claims, wherein each band comprises a further textile layer on a side which in use faces the user's skin.

8. The massage garment according to any one of the preceding claims, wherein the means for applying energy, to cause the artificial muscles to be heated, comprise a resistive heating mechanism.

9. The massage garment according to claim 8, wherein the at least one coiled element is conductive or comprises at least one conductive filament.

10. The massage garment according to any one of the preceding claims, wherein said means for applying energy comprise an interface for connecting the massage garment to a control unit (107) and a power source.

11. The massage garment according to any one of the preceding claims, wherein said means for applying energy comprise a control unit and a power source.

12. The massage garment according to claim 11, wherein the control unit is provided for monitoring at least one process parameter when applying energy to the at least one artificial muscle.

13. The massage garment according to claim 12, wherein the at least one process parameter comprises at least one of: a temperature of the artificial muscles, the pressure applied to the limb, and/or the energy supplied to the at least one artificial muscle, and preferably the energy is applied such that the temperature of the at least one artificial muscle stays below a predetermined temperature and/or the applied pressure stays below a predetermined pressure.

14. The massage garment according to any one of claims 11-13, wherein the garment comprises a plurality of said bands and/or each band comprises a plurality of said artificial muscles, and wherein the control unit is provided for activating the bands and/or the artificial muscles according to a predetermined schedule, such as in a sequential or random order.

15. The massage garment according to claim 14, wherein the control unit is programmed to control the massage garment to perform a treatment program for the treatment of lymphoedema.

## Patentansprüche

1. Massagekleidungsstück (100), das Folgendes umfasst:
mindestens ein Band (101-106), das dazu vorgesehen ist, um eine Gliedmaße eines Benutzers gelegt zu werden, und das mindestens einen künstlichen Muskel (700) umfasst, der so angeordnet ist, dass er zumindest einen Teil der Gliedmaße umgibt und eine Kompressionskraft auf die Gliedmaße ausübt, und
Mittel zum Zuführen von Energie (108), um eine Erwärmung der künstlichen Muskeln zu bewirken,
wobei jedes Band ein gestricktes oder gewebtes Textilgewebe (210) umfasst, **dadurch gekennzeichnet, dass** jeder künstliche Muskel ein gewickeltes Element (203) umfasst, das sich bei Erwärmung zusammenzieht, und das mindestens eine gewickelte Element ein gewickeltes Filament in einem in das Textilgewebe integrierten Polymermaterial ist.

2. Massagekleidungsstück nach Anspruch 1, wobei das Textilgewebe aus einem wärme- und/oder elektrisch isolierenden Material besteht.

3. Massagekleidungsstück nach Anspruch 1 oder 2, wobei das Textilgewebe ein Gewebe ist und wobei jedes des mindestens einen gewickelten Elements als Garn des Gewebes vorgesehen ist.

4. Massagekleidungsstück nach Anspruch 3, wobei jedes des mindestens einen gewickelten Elements als erstes Kettgarn des Gewebes vorgesehen ist.

5. Massagekleidungsstück nach Anspruch 4, wobei das Textilgewebe zweite Kettgarne aus wärme- und/oder elektrisch isolierendem Material umfasst, wobei sich die zweiten Kettgarne mit den ersten Kettgarnen abwechseln.

6. Massagekleidungsstück nach einem der vorhergehenden Ansprüche, wobei jedes Band dehnbar ist, um einen Grunddruck auf die Gliedmaße auszuüben.

7. Massagekleidungsstück nach einem der vorhergehenden Ansprüche, wobei jedes Band eine weitere Textilschicht auf einer Seite umfasst, die im Gebrauch der Haut des Benutzers zugewandt ist.

8. Massagekleidungsstück nach einem der vorhergehenden Ansprüche, wobei die Mittel zum Zuführen von Energie, um eine Erwärmung der künstlichen Muskeln zu bewirken, einen Widerstandsheizmechanismus umfassen.

9. Massagekleidungsstück nach Anspruch 8, wobei das mindestens eine gewickelte Element leitfähig ist oder mindestens ein leitfähiges Filament umfasst.

10. Massagekleidungsstück nach einem der vorhergehenden Ansprüche, wobei die besagten Mittel zum Zuführen von Energie eine Schnittstelle zum Verbinden des Massagekleidungsstücks mit einer Steuerungseinheit (107) und einer Stromquelle umfassen.

11. Massagekleidungsstück nach einem der vorhergehenden Ansprüche, wobei die besagten Mittel zum Zuführen von Energie eine Steuerungseinheit und eine Stromquelle umfassen.

12. Massagekleidungsstück nach Anspruch 11, wobei die Steuerungseinheit zum Überwachen mindestens eines Prozessparameters beim Zuführen von Energie zu dem mindestens einen künstlichen Muskel vorgesehen ist.

13. Massagekleidungsstück nach Anspruch 12, wobei der mindestens eine Prozessparameter mindestens eines von Folgendem umfasst: eine Temperatur der künstlichen Muskeln, den auf die Gliedmaße ausgeübten Druck und/oder die dem mindestens einen künstlichen Muskel zugeführte Energie, und vorzugsweise wird die Energie so zugeführt, dass die Temperatur des mindestens einen künstlichen Muskels unter einer vorbestimmten Temperatur bleibt und/oder der ausgeübte Druck unter einem vorbestimmten Druck bleibt.

14. Massagekleidungsstück nach einem der Ansprüche 11-13, wobei das Kleidungsstück eine Vielzahl der besagten Bänder umfasst und/oder jedes Band eine Vielzahl der besagten künstlichen Muskeln umfasst und wobei die Steuerungseinheit zum Aktivieren der Bänder und/oder der künstlichen Muskeln gemäß einem vorbestimmten Zeitplan, beispielsweise in einer sequentiellen oder zufälligen Reihenfolge, vorgesehen ist.

15. Massagekleidungsstück nach Anspruch 14, wobei die Steuerungseinheit so programmiert ist, dass sie das Massagekleidungsstück so steuert, dass es ein Behandlungsprogramm zur Behandlung von Lymphödemen ausführt.

## Revendications

1. Vêtement de massage (100), comprenant
au moins une bande (101-106), prévue pour être placée autour d'un membre d'un utilisateur et comprenant au moins un muscle artificiel (700) agencé pour entourer au moins une partie du membre et pour appliquer une force de compression au membre, et
des moyens pour appliquer de l'énergie (108) afin de provoquer le chauffage des muscles artificiels,
où chaque bande comprend un tissu textile tricoté ou tissé (210), **caractérisé en ce que** chaque muscle artificiel comprend un élément enroulé (203) qui se contracte lorsqu'il est chauffé, et l'au moins un élément enroulé est un filament enroulé en un matériau polymère intégré dans le tissu textile.

2. Vêtement de massage selon la revendication 1, où le tissu textile est constitué d'un matériau isolant thermiquement et/ou électriquement.

3. Vêtement de massage selon la revendication 1 ou 2, où le tissu textile est un tissu tissé et où chacun de l'au moins un élément enroulé est prévu sous la forme d'un fil du tissu tissé.

4. Vêtement de massage selon la revendication 3, où chacun de l'au moins un élément enroulé est prévu sous la forme d'un premier fil de chaîne du tissu tissé.

5. Vêtement de massage selon la revendication 4, où le tissu textile comprend des deuxièmes fils de chaîne en matériau isolant thermiquement et/ou électriquement, les deuxièmes fils de chaîne alternant avec les premiers fils de chaîne.

6. Vêtement de massage selon l'une quelconque des revendications précédentes, où chaque bande est extensible afin d'appliquer une pression de base sur le membre.

7. Vêtement de massage selon l'une quelconque des revendications précédentes, où chaque bande comprend une couche textile supplémentaire sur un côté qui, lors de l'utilisation, fait face à la peau de l'utilisateur.

8. Vêtement de massage selon l'une quelconque des revendications précédentes, où les moyens pour appliquer de l'énergie, afin de provoquer le chauffage des muscles artificiels, comprennent un mécanisme de chauffage résistif.

9. Vêtement de massage selon la revendication 8, où l'au moins un élément enroulé est conducteur ou comprend au moins un filament conducteur.

10. Vêtement de massage selon l'une quelconque des revendications précédentes, où lesdits moyens pour appliquer de l'énergie comprennent une interface pour connecter le vêtement de massage à une unité de commande (107) et à une source d'alimentation.

11. Vêtement de massage selon l'une quelconque des revendications précédentes, où lesdits moyens pour appliquer de l'énergie comprennent une unité de commande et une source d'alimentation.

12. Vêtement de massage selon la revendication 11, où l'unité de commande est prévue pour surveiller au moins un paramètre de processus lors de l'application d'énergie à l'au moins un muscle artificiel.

13. Vêtement de massage selon la revendication 12, où l'au moins un paramètre de processus comprend au moins l'une parmi : une température des muscles artificiels, la pression appliquée au membre et/ou l'énergie fournie à l'au moins un muscle artificiel, et de préférence l'énergie est appliquée de telle sorte que la température de l'au moins un muscle artificiel reste inférieure à une température prédéterminée et/ou que la pression appliquée reste inférieure à une pression prédéterminée.

14. Vêtement de massage selon l'une quelconque des revendications 11 à 13, où le vêtement comprend une pluralité desdites bandes et/ou chaque bande comprend une pluralité desdits muscles artificiels, et où l'unité de commande est prévue pour activer les bandes et/ou les muscles artificiels selon un programme prédéterminé, par exemple dans un ordre séquentiel ou aléatoire.

15. Vêtement de massage selon la revendication 14, où l'unité de commande est programmée pour commander le vêtement de massage afin qu'il exécute un programme de traitement pour le traitement du lymphœdème.
